# EUROPEAN PATENT APPLICATION

(11) **EP 1 998 140 A2**
(43) Date of publication of application: **03.12.2008**
(21) Application number: 08156646.5
(22) Date of filing: 21.05.2008
(51) Int. Cl.: G01C 21/32

(54) **System and method for updating map data**

(30) Priority: 31.05.2007 JP 2007144678
(71) Applicant: Aisin AW Co., Ltd., Fuji-cho Anjo-shi Aichi 444-1192 (JP)
(72) Inventor: Takahata, Seiji, Okazaki-shi Aichi 444-8564 (JP)
(74) Representative: TBK-Patent

(57) **Abstract**

A map distribution center creates an instruction data that is in a format unified among pieces of map structuring data that structure a map data and transmits the created instruction data to a navigation apparatus. The navigation apparatus rewrites, in units of bytes, a data portion of a navigation map data that has been identified by the transmitted instruction data so that the data portion has new contents of data, and the navigation map data is thus updated to a new version of map data.

## Description

### INCORPORATION BY REFERENCE

The disclosure of Japanese Patent Application No. 2007-144678 filed on May 31, 2007 including the specification, drawings and abstract is incorporated herein by reference in its entirety.

### BACKGROUND OF THE INVENTION

### 1. Field of the Invention

The present invention relates to a map updating system and a map updating method for updating map data that is used in navigation apparatuses and the like.

### 2. Description of the Related Art

Recently, many vehicles have a navigation apparatus installed therein, the navigation apparatus being operable to provide driving guidance for the vehicle and to help the driver of the vehicle to reach a desired destination easily. The navigation apparatus in the present example denotes an apparatus that is operable to detect a current position of the vehicle with the use of a GPS receiver or the like, to obtain the map data that corresponds to the current position from a recording medium such as a DVD-ROM or an HDD or via a network, and to display the obtained map data on a liquid crystal display monitor. The map data that contains the current position of the vehicle is read from the recording medium or the like, and a map image of the surroundings of the current position of the vehicle is rendered based on the map data and displayed on the display device. Also, a vehicle position mark **(i.e., "the location")** is displayed by being superimposed on the map image. The map image is scrolled according to the movement of the vehicle, or the vehicle position mark is moved while the map image is fixed on the screen. Thus, the navigation apparatus allows the driver of the vehicle to understand, at a glance, where the vehicle is traveling at any given moment.

In Japan, new roads (**newly constructed roads**) are constructed every year nationwide. Also, due to the construction of the new roads, some old roads no longer exist, and the formation of other old roads is changed. Thus, it is necessary to update the map data stored in the navigation apparatus at certain intervals of time. In this situation, the map data is updated by purchasing a new DVD and replacing the old DVD with the new one or by rewriting the contents of the HDD based on map data that is distributed from a map distribution center or the like. **(See, for example, Japanese Patent Application Publication No.** JP-A-2004-108834**; pages 4-6 and** **FIGS. 2-7****).**

### SUMMARY OF THE INVENTION

The map data used in the navigation apparatus as described above is structured with a set of a large number of pieces of data including image data used for displaying maps on the display device, link data that is related to links that structure road networks, node data that is related to nodes, and audio data used for providing guidance to the user.
According to the map data updating method of the related art disclosed in Japanese Patent Application Publication No. JP-A-2004-108834, when the map data is to be updated, a new set of map structuring data is obtained by rewriting the entirety of each of the pieces of data as update targets among the plurality of pieces of map structuring data that structure the map data. In this situation, because the entirety of each of the pieces of data needs to be rewritten, the data amount that is required in the updating process is large. Thus, when it is assumed that the navigation apparatus needs to obtain the large amount of data through communication with the map distribution center or the like, the communication time it takes to perform the data communication is long, and the communication cost is also high. In addition, the processing load related to the map data updating process is also large.

To solve the problems in the related art described above, it is an object of the present invention to provide a map updating system and a map updating method with which it is possible to reduce the data amount that is required in the map data updating process, by updating the map data in units of bytes based on instruction data, and to shorten the communication time, to reduce the communication cost, and to reduce the processing load related to the updating process.

In the map updating system according to a first aspect of the present invention, instead of updating the entirety of the pieces of map structuring data, only the update target portion within the pieces of map structuring data is updated in units of bytes based on the instruction data. Thus, it is possible to reduce the data amount that is required in the map data updating process. As a result, it is possible to shorten the communication time related to the map data updating process, to reduce the communication cost, and to reduce the processing load related to the updating process.

In the map updating system according to a second aspect of the present invention, the map structuring data and the instruction data are configured so as to be permanent with the use of the identifiers. Thus, it is possible to reduce the data size of the data within the instruction data that is required in order to identify the map structuring data as an update target. As a result, it is possible to further reduce the data size of the instruction data.

Further, in the map updating method according to a third aspect of the present invention, the map data is updated in units of bytes based on the instruction data. Thus, it is possible to reduce the data amount that is required in the map data updating process. As a result, it is possible to shorten the communication time related to the map data updating process, to reduce the communication cost, and to reduce the processing load related to the updating process.

### BRIEF DESCRIPTION OF THE DRAWINGS

FIG. 1 is a schematic configuration drawing of a map updating system according to the present embodiment;
FIG. 2 is a block diagram that shows the configurations of the map updating system according to the present embodiment;
FIG. 3 is a drawing for explaining a mechanism for managing the versions of the map data used in the map updating system according to the present embodiment;
FIG. 4 is a block diagram that shows the configuration of a navigation apparatus according to the present embodiment;
FIG. 5 is a drawing for explaining a procedure for updating the map data stored in the navigation apparatus according to the present embodiment;
FIG. 6 is a schematic drawing that shows the map data updating processes that are performed by the navigation apparatus for the Nth time and for the (**N+1**)th time;
FIG. 7 is a drawing for explaining a map data updating method that is used in the map updating system according to the present embodiment;
FIG. 8 is a drawing for explaining a format of the instruction data according to the present embodiment;
FIG. 9 is a drawing that shows an outline of a specific example of the instruction data according to the present embodiment;
FIG. 10 is a drawing that shows an outline of the navigation map data before being updated according to the instruction data shown in FIG. 9;
FIG. 11 is a drawing that shows an outline of the navigation map data after being updated according to the instruction data shown in FIG. 9; and
FIG. 12 is a flowchart of a map data update processing program according to the present embodiment.

### DETAILED DESCRIPTION OF THE PREFERRED EMBODIMENTS

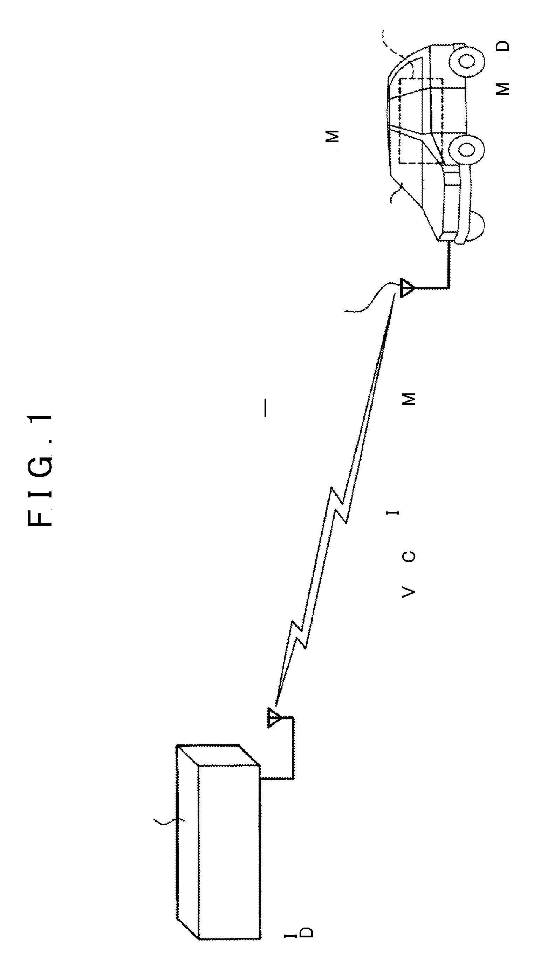

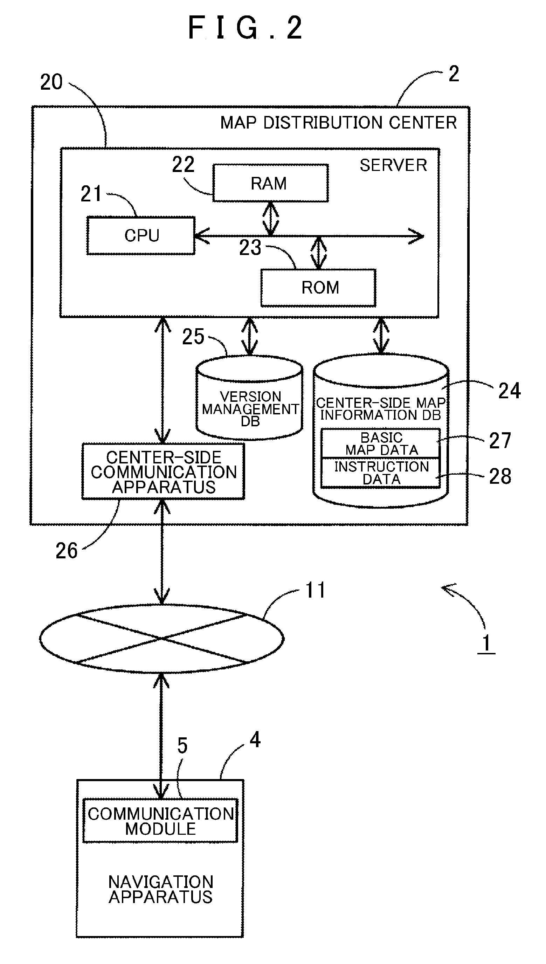

A map updating system according to the present invention will be explained in detail, based on an embodiment in which the invention is embodied and with reference to the drawings.
First, a schematic configuration of a map updating system 1 according to the present embodiment will be explained, with reference to FIGS. 1 and 2. FIG. 1 is a schematic configuration drawing of the map updating system 1 according to the present embodiment.
FIG. 2 is a block diagram that shows the configurations of the map updating system 1 according to the present embodiment.

As shown in FIG. 1, the map updating system 1 according to the present embodiment is basically configured so as to include a map distribution center 2 and a navigation apparatus 4 that is installed in a vehicle 3.

In this situation, the map distribution center 2 is a distribution center that creates an instruction data used for updating an old version of map data to a new version of map data and distributes the created instruction data.

The navigation apparatus 4 is installed in the vehicle 3 that is being driven or being parked on any of the roads in the country. The navigation apparatus 4 is an in-vehicle apparatus that is operable to display a map of the surroundings of the vehicle position based on the map data stored therein and also searches for a route and provides guidance to a specified destination.

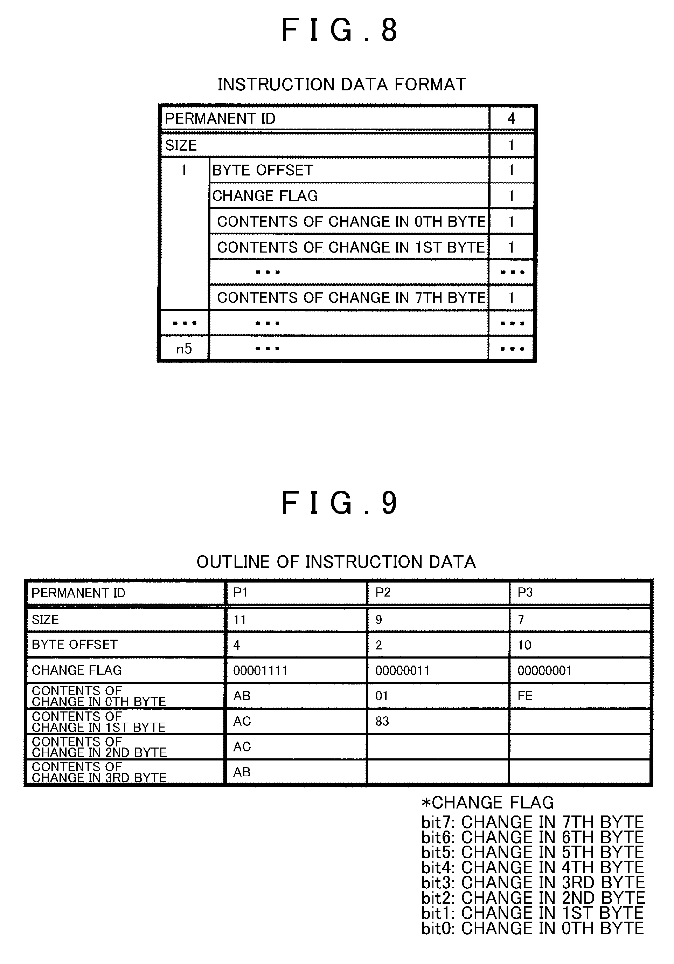

The map distribution center 2 and the navigation apparatus 4 are configured so as to be able to communicate with each other bi-directionally by using an in-vehicle communication module 5 (**hereinafter, it will be simply referred to as the "communication module 5"**) that is installed in the vehicle 3 in advance. The map distribution center 2 and the navigation apparatus 4 transmit and receive various types of information including the instruction data to and from each other. The instruction data is a data that is structured with an instruction indicating that only specific portions of the map data stored in the navigation apparatus 4 should be updated, in units of bytes, to new pieces of data, as explained later (**see** **FIGS. 8 and 9****)**. The communication module 5 may be configured with, for example, a mobile phone or a DCM (**Data Communication Module)**.

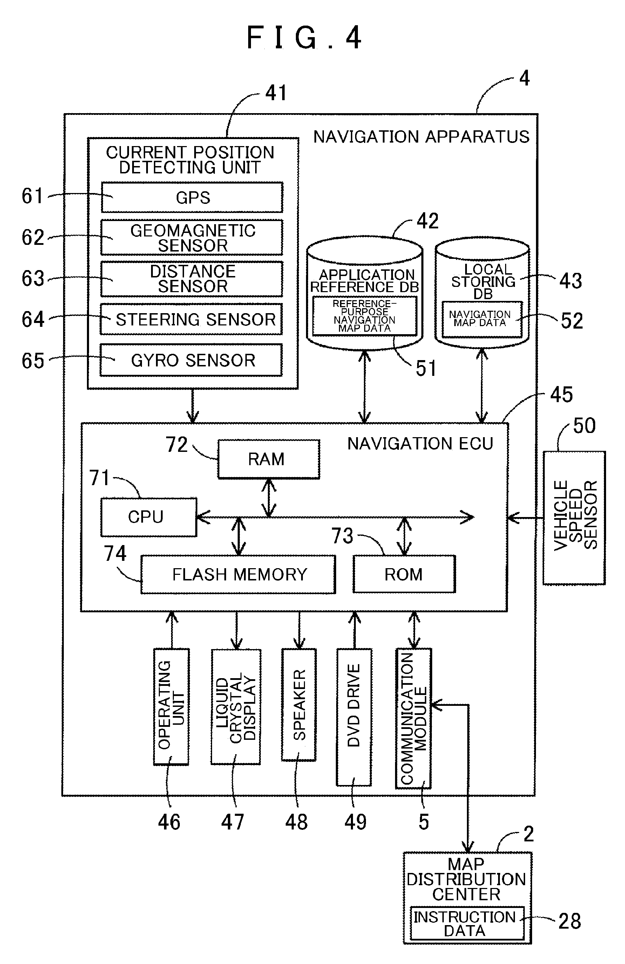

The navigation apparatus 4 is configured so as to be able to update the map data stored in the navigation apparatus 4 to the new version of map data, by using the instruction data that has been obtained from the map distribution center 2 via the communication module 5. The configuration of the navigation apparatus 4 will be explained later further in detail, with reference to FIG. 4.

Next, the map distribution center 2 included in the map updating system 1 will be explained further in detail, with reference to FIG. 2.
The map distribution center 2 includes, as shown in FIG. 2, a server **(i.e., an instruction data creating unit**) 20; a center-side map information DB 24 that is connected to the server 20 and serves as an information recording unit; a version management DB 25; and a center-side communicating apparatus 26. The server 20 includes a CPU 21 that exercises overall control of the server 20 and serves as a computation device and a control device as well as internal storage devices such as a RAM 22 that is used as a working memory while the CPU 21 is performing various types of computation processes and a ROM 23 that has recorded therein various types of control program used for performing, for example, an instruction data creating process to create the instruction data based on the old version of map data and the new version of map data and a map data distribution process to distribute the created instruction data to the navigation apparatus 4.

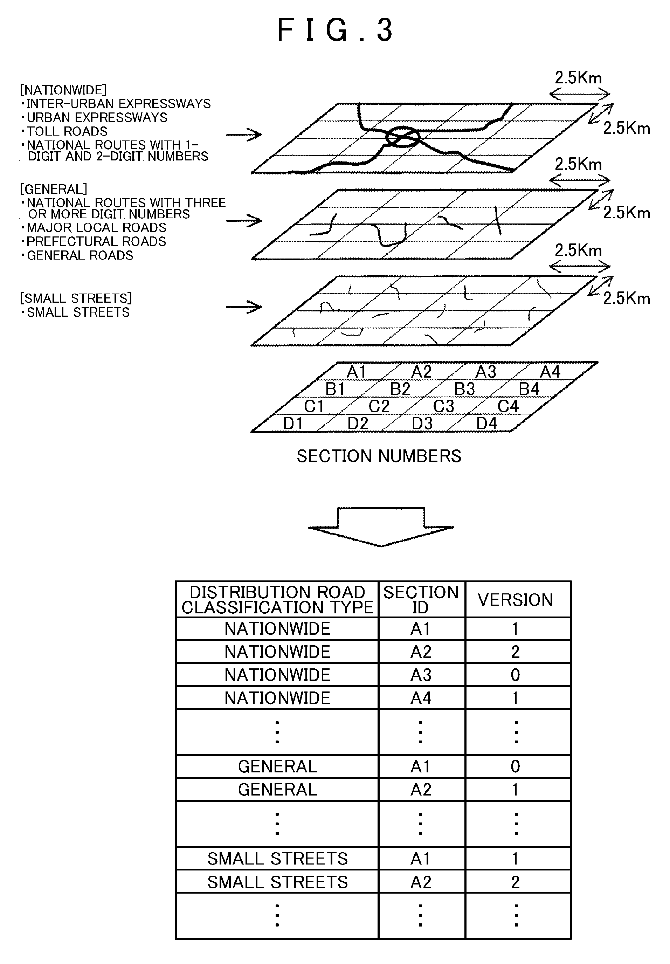

The center-side map information DB 24 has stored therein a basic map data 27 that has been created based on input data and input operations from the outside and is used as a base when the map data stored in the navigation apparatus 4 is updated, while the basic map data 27 is divided into sections according to the versions thereof. In this situation, each of the versions is creation time information used for identifying the time at which the map data was created. By referring to the versions, it is possible to identify the time at which each piece of map data was created. Also, the center-side map information DB 24 has stored therein an instruction data 28 that has been created by the server 20 based on the basic map data 27 and is used for updating the map data stored in the navigation apparatus 4 to the new version of map data, while the instruction data 28 is divided into sections according to the versions thereof.
In the map updating system 1 according to the present embodiment, the versions of the map data are managed for each of 2.5 kilometer square areas. In order to manage the versions, these 2.5 kilometer square areas are further classified into three types according to a road standard. FIG. 3 is a drawing for explaining a mechanism for managing the versions of the map data used in the map updating system 1 according to the present embodiment.

As shown in FIG. 3, in order to manage the versions, a section ID is assigned to each of the 2.5 kilometer square areas **(A1 to D4 are assigned to sixteen areas in the example shown in** **FIG. 3****).** Further, each of the areas is managed by bringing versions into correspondence with the three distribution road classification types defined according to the road standard. More specifically, inter-urban expressways, urban expressways, toll roads, and national routes identified with one-digit and two-digit numbers are classified as a distribution road classification type called "nationwide". National routes identified with three-digit numbers, major local roads, prefectural roads, and general roads are classified as a distribution road classification type called "general". Small streets are classified as a distribution road classification type called "small streets". Accordingly, for any single area, there are three versions of map data that respectively correspond to different target road types.
For example, for the area Al shown in FIG. 3, the map data for the distribution road classification type "nationwide" has a version number "1", and the map data for the distribution road classification type "general" has a version number "0", whereas the map data for the distribution road classification type "small streets" has a version number "1".

The center-side communicating apparatus 26 is a communicating apparatus used for performing communication with the navigation apparatus 4 via a network 11. In the present example, the network 11 may use a communication system of communication networks such as a LAN (**Local Area Network**), a WAN (**Wide Area Network**), an intranet, a mobile phone line network, a telephone line network, a public communication network, a private communication network, or the Internet.

Next, a schematic configuration of the navigation apparatus 4 that is included in the map updating system 1 according to the present embodiment will be explained, with reference to FIG. 4. FIG. 4 is a block diagram that shows the configuration of the navigation apparatus 4 according to the present embodiment.

As shown in FIG. 4, the navigation apparatus 4 according to the present embodiment includes: a current position detecting unit 41 that detects a current position of the vehicle in which the navigation apparatus 4 is installed; an application reference DB **(i.e., a map data storing unit)** 42; a local storing DB **(i.e., a map data storing unit)** 43; a navigation ECU **(i.e., a data updating unit)** 45 that performs various types of computation processes based on information that has been input thereto; an operating unit 46 that receives an operation from an operator; a liquid crystal display 47 that displays information such as a map for the operator; a speaker 48 that outputs voice guidance related to route guidance; a DVD drive 49 that is a reading device operable to read information from a recording medium such as a CD or a DVD; and the communication module 5 that performs communication with traffic information centers such as VICS centers and with the map distribution center 2. A vehicle speed sensor 50 that detects the driving speed of the vehicle is connected to the navigation ECU 45.

Next, the structural elements of the navigation apparatus 4 will be explained.
The current position detecting unit 41 includes a GPS 61, a geomagnetic sensor 62, a distance sensor 63, a steering sensor 64, a gyro sensor 65 that serves as a direction detecting unit, and an altimeter (**not shown in the drawing**). The current position detecting unit 41 is operable to detect the current position and the current orientation of the vehicle.

The application reference DB 42 is a storing unit that stores therein a reference-purpose navigation map data 51 that is used by the navigation apparatus 4 for providing driving guidance and searching for routes as well as predetermined programs and the like.

The local storing DB 43 is a storing unit that stores therein a navigation map data 52 that is the map data to be updated based on the instruction data 28. Also, as explained later, the reference-purpose navigation map data 51 is created by converting the navigation map data 52 stored in the local storing DB 43.

Like the basic map data 27 mentioned above, the reference-purpose navigation map data 51 and the navigation map data 52 are each structured with various types of information that are required when route guidance is provided and maps are displayed. For example, the reference-purpose navigation map data 51 and the navigation map data 52 are each structured with map display data used for displaying maps, intersection data that is related to intersections, node data that is related to node points, link data that is related to roads **(i.e., links),** search data used for searching for a route, facility data that is related to facilities, and retrieval data for retrieving a location point.
The navigation map data 52 is updated to a new version of map data as a result of rewriting corresponding portions of the data with new pieces of data, based on the instruction data that has been distributed from the map distribution center 2. Similarly, the reference-purpose navigation map data 51 is updated to a new version of map data as a result of converting the navigation map data 52 that has been updated. The specific processes that are performed in order to update the reference-purpose navigation map data 51 and the navigation map data 52 will be explained later in detail, with reference to a flowchart.

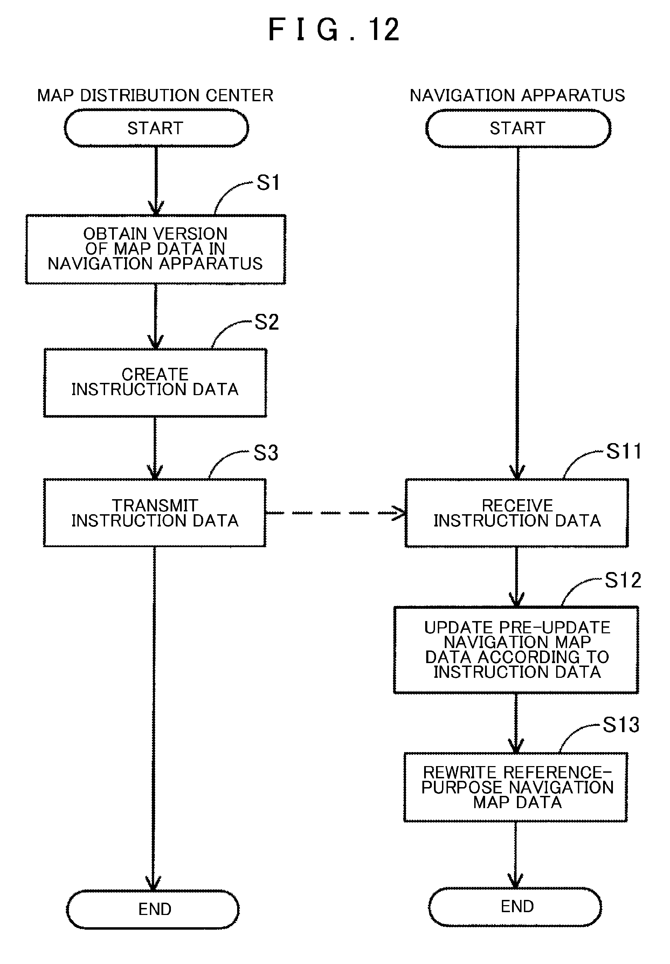

The navigation ECU (**Electronic Control Unit**) 45 that is included in the navigation apparatus 4 is an electronic control unit that exercises overall control of the navigation apparatus 4 by performing, for example, a route guidance process to search for a route and provide guidance based on the reference-purpose navigation map data 51 and a map data updating process to update the reference-purpose navigation map data 51 and the navigation map data 52 based on the instruction data. The navigation ECU 45 includes a CPU 71 that serves as a computation device and a control device as well as internal storage devices such as a RAM 72 that is used as a working memory while the CPU 71 is performing various types of computation processes and that stores therein route data and the like after a route has been found in a search, a ROM 73 that has recorded therein a control program as well as a map data update processing program **(****FIG. 12****),** which is explained later, and a flash memory 74 that records therein a program read from the ROM 73.

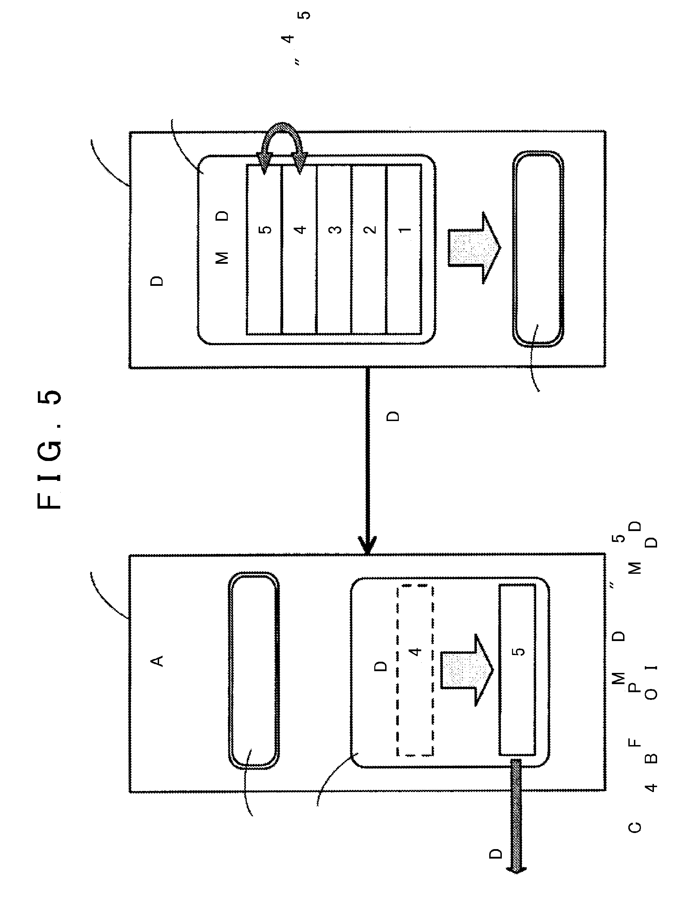

Next, a procedure for updating the navigation map data 52 that is stored in the local storing DB 43 included in the navigation apparatus 4 will be explained, with reference to FIG. 5. FIG. 5 is a drawing for explaining the procedure for updating the map data stored in the navigation apparatus 4 according to the present embodiment.
As shown in FIG. 5, when a new version of map data (**e.g., Ver. 5 in the example shown in** **FIG. 5****)** has been created in the map distribution center 2, the map distribution center 2 creates the instruction data 28 by comparing, within the map data stored as the basic map data 27, the old version **(e.g., Ver. 4 in the example shown in** **FIG. 5****)** of map data that is currently stored in the navigation apparatus 4 with the newest version **(e.g., Ver. 5 in** **FIG. 5**) of map data that is currently stored in the map distribution center 2. The map distribution center 2 then transmits the created instruction data 28 to the navigation apparatus 4 that is installed in the vehicle 3.

In this situation, the instruction data 28 is a data that is used for updating the old version of map data to the new version of map data and that indicates, in units of bytes, the portions to be updated and the contents of the data after the update **(i.e., the post-update** contents of data). The instruction data 28 is created by using a format that is unified among a large number of pieces of map structuring data that structure the map data. Accordingly, it is possible to create the new version of map data by rewriting the corresponding portions of the old version of map data so that the corresponding portions have the new contents of data, according to the instruction data 28. The method for updating the map data based on the instruction data will be explained later in detail.

On the other hand, when the navigation apparatus 4 has received the instruction data 28, the navigation apparatus 4 creates the newest version **(e.g., Ver. 5 in** **FIG. 5****)** of map data by rewriting a part of the old version **(e.g., Ver. 4 in** **FIG. 5****)** of map data that is currently stored in the navigation apparatus 4 with a new piece of data according to the instruction in the instruction data 28 and stores the newest version of map data that has been created as the navigation map data 52. At this time, the update processing program used for updating the map data may be stored in the navigation apparatus 4 in advance or may be obtained from the map distribution center 2 together with the instruction data 28. The instruction data 28 may be obtained from the map distribution center 2 via a recording medium like a DVD or a CD, instead of via the network 11.
After that, the navigation apparatus 4 also updates the reference-purpose navigation map data 51 to the newest version of map data by converting the updated navigation map data 52.

In the map updating system 1 according to the present embodiment, every time a new version of map data is created in the map distribution center 2, the updating procedure described above is repeatedly performed. As a result, the navigation apparatus 4 is able to store therein, at all times, the newest version of map data as the navigation map data 52.

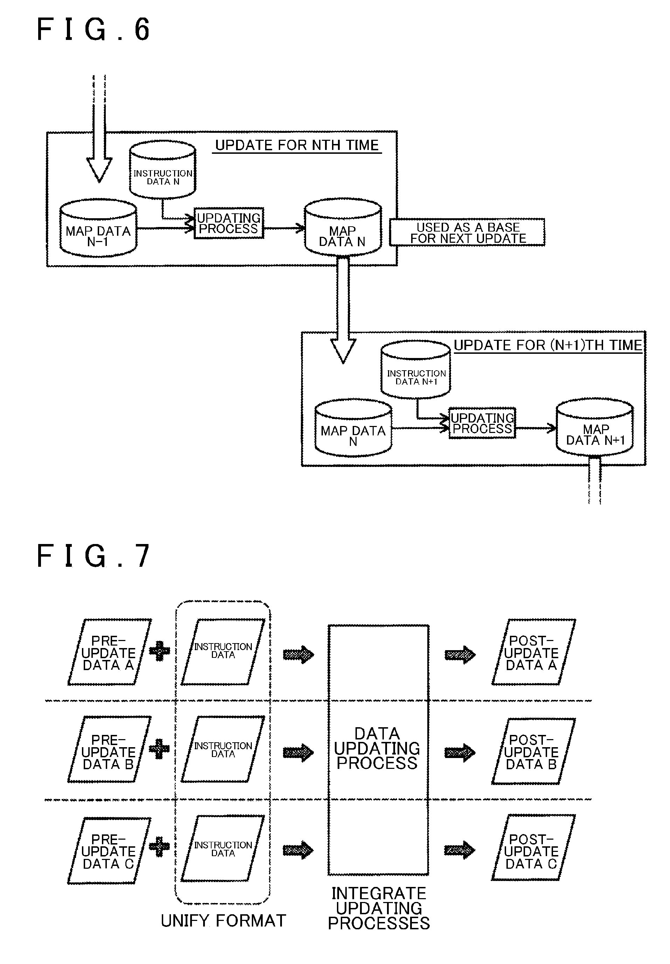

FIG. 6 is a schematic drawing for explaining examples of the map data updating processes that are performed by the navigation apparatus 4 for the Nth time and for the (**N+1**)th time.

As shown in FIG. 6, when the map data is to be updated for the Nth time, the map data that has been updated in the updating process performed for the (**N-1**)th time is updated based on the instruction data 28 received from the map distribution center 2 for the Nth time. As a result, the map data that has been updated for the Nth time is created. In this situation, the map data that has been updated in the updating process performed for the Nth time is used as a base of the map data that is updated in the following updating process performed for the (**N+1**)th time.
When the map data is to be updated for the (**N+1**)th time, the map data that has been updated in the updating process performed for the Nth time is updated based on the instruction data 28 received from the map distribution center 2 for the (**N+1**)th time. As a result, the map data that has been updated for the (**N+1**)th time is created. Further, the map data that has been updated in the updating process for the (**N+1**)th time is used as a base of the map data that is updated in the following updating process performed for the (N+2)th time.

Next, the updating process to update the navigation map data 52 stored in the navigation apparatus 4 will be explained, with reference to FIGS. 7 to 11. FIG. 7 is a drawing for explaining a map data updating method that is used in the map updating system 1 according to the present embodiment. FIG. 8 is a drawing for explaining a format of the instruction data according to the present embodiment. FIG. 9 is a drawing that shows an outline of a specific example of the instruction data according to the present embodiment.

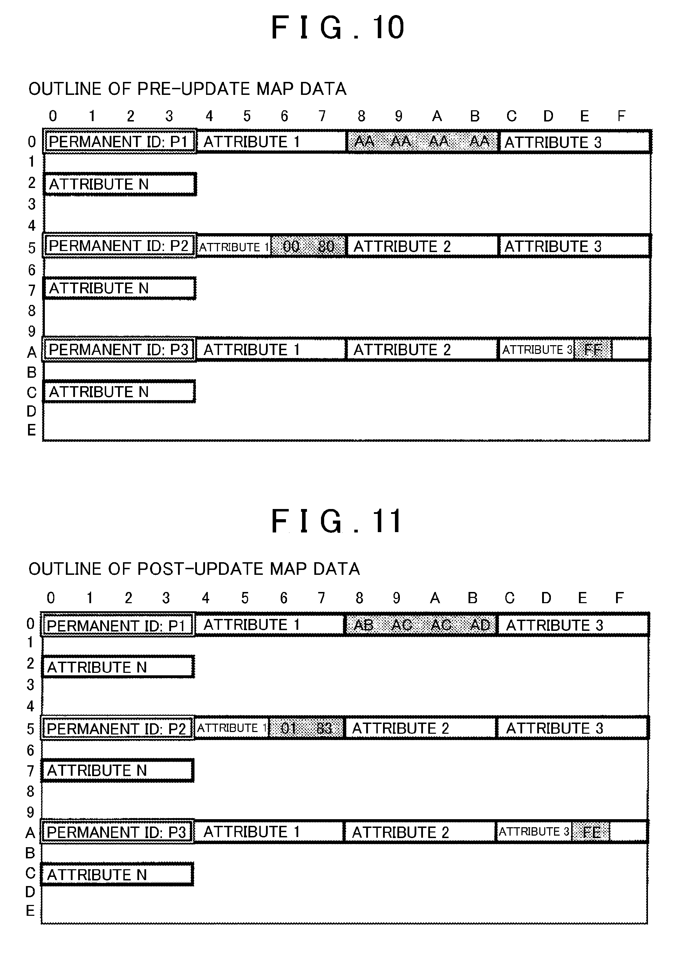

FIG. 10 is a drawing that shows an outline of the navigation map data before being updated according to the instruction data shown in FIG. 9. FIG. 11 is a drawing that shows an outline of the navigation map data after being updated according to the instruction data shown in FIG. 9.

With regard to the updating process of the map data shown in the drawings FIG. 7 and thereafter, the updating procedure will be explained by using an example in which the map data is structured with three pieces of map structuring data, i.e., data A (**of which the permanent ID is P1),** data B **(of which the permanent ID is P2)** and data C **(of which** the permanent ID is P3). In this situation, as shown in FIG. 10, each of the pieces of map structuring data is configured so as to include a permanent ID and a plurality of pieces of attribute data (**"Attribute 1", "Attribute 2**", ...). Each of the permanent IDs is an invariable identifier used for identifying the corresponding piece of map structuring data. By referring to the permanent IDs, it is possible to easily identify, without fail, each of the pieces of map structuring data that are being the update targets, regardless of the type of each of the pieces of map structuring data. Each of the plurality of pieces of attribute data has the contents of data that are determined, in advance, according to the type of the corresponding piece of map structuring data. For example, in the case where the corresponding piece of map structuring data is a data that is related to links, data that is related to the type of the road is stored in "Attribute 1", whereas data that is related to the link length is stored in "Attribute 2".

As shown in FIG. 7, when data A is to be updated, within data A that is pre-update and old, the data in the portion identified by the instruction data 28 that is in a format unified among data A, data B, and data C is rewritten, in units of bytes, with a new piece of data. As a result, data A that is post-update and new is created. Similarly, when data B and data C are to be updated, the data in the portions that are identified by the instruction data 28 are rewritten, in units of bytes, with new pieces of data. As a result, data B and data C that are post-update and new are created.

Also, as shown in FIG. 8, the instruction data 28 is configured so as to include: a permanent ID that is an identifier for identifying the piece of map structuring data that is being an update target; the data size of the instruction data; a byte offset value for identifying a portion to be updated **(i.e., a data starting point)** within the map data; a change flag for indicating, for each of the bytes, whether the data should be changed **(i.e., updated**) or not; and the specific contents of data that are described for each of the bytes and to which the old data is to be updated. An instruction record extracts the data in the data range corresponding to eight bytes starting with the starting point identified by the byte offset value and rewrites the data so that each of the bytes has the new contents of data, according to the on/off indication of the change flag.

For example, the instruction data shown in FIG. 9 instructs that, with respect to the piece of map structuring data identified with the permanent ID "P1", the data in the fifth byte excluding the storage area for the permanent ID should be rewritten so as to be "AB", the data in the sixth byte should be rewritten so as to be "AC", and the data in the seventh byte should be rewritten so as to be "AC", and the data in the eighth byte should be rewritten so as to be "AD".
Also, the instruction data instructs, with respect to the piece of map structuring data identified with the permanent ID "P2", the data in the third byte excluding the storage area for the permanent ID should be rewritten so as to be "01", and the data in the fourth byte should be rewritten so as to be "83".
Further, the instruction data instructs, with respect to the piece of map structuring data identified with the permanent ID "P3", the data in the eleventh byte excluding the storage area for the permanent ID should be rewritten so as to be "FE".

When the map data shown in FIG. 10 is updated according to the instruction data shown in FIG. 9, the contents of the data in the portions identified by the instruction data are rewritten. As a result, as shown in FIGS. 10 and 11, with respect to the piece of map structuring data identified with the permanent ID "P1", the data in the fifth byte excluding the storage area for the permanent ID is rewritten from "AA" to "AB", the data in the sixth byte is rewritten from "AA" to "AC", the data in the seventh byte is rewritten from "AA" to AC", and the data in the eighth byte is rewritten from "AA" to "AD". With respect to the piece of map structuring data identified with the permanent ID "P2", the data in the third byte excluding the storage area for the permanent ID is rewritten from "00" to "01", and the data in the fourth byte is rewritten from "80" to "83". Further, with respect to the piece of map structuring data identified with the permanent ID "P3", the data in the eleventh byte excluding the storage area for the permanent ID is rewritten from "FF" to "FE". As a result of the processes described above, the navigation map data 52 has now been updated to the new version of map data.
As explained above, when the map data updating method according to the present embodiment is used, regardless of the type of each of the pieces of structuring data that structures the map data, it is possible to update the contents of the data in units of bytes, according to the instruction data that is in the format used in common. Also, it is possible to use only one type of program that executes the updating process. Consequently, it is possible to reduce the processing load related to the updating process. In addition, the map structuring data and the instruction data are configured so as to be permanent with the use of the permanent IDs. As a result, it is possible to reduce the data amount of the data within the instruction data that is required in order to identify the pieces of map structuring data that are being the update targets. Consequently, it is possible to further reduce the data size of the instruction data.

Next, the map data update processing program that is executed by the server 20 provided in the map distribution center 2 and by the navigation ECU 45 included in the navigation apparatus 4 in the map updating system 1 that is configured as described above will be explained with reference to FIG. 12. FIG. 12 is a flowchart of the map data update processing program according to the present embodiment. In this situation, the map data update processing program is a program that is executed when a new version of map data has been created in the map distribution center 2 and is for creating the instruction data based on the map data that has newly been created in the map distribution center 2 and updating the reference-purpose navigation map data 51 and the navigation map data 52 that are stored in the navigation apparatus 4 to the new version of map data. It should be noted that the program explained in the flowchart shown in FIG. 12 is stored in the RAM or the ROM in the map distribution center 2 and the navigation apparatus 4, and is executed by the CPU 21 and the CPU 71.

First, the map data update processing program executed by the CPU 21 in the map distribution center 2 will be explained, with reference to FIG. 12. First, at Step (hereinafter, simply referred to as "S") 1, the CPU 21 obtains the information related to the version of the map data stored in the navigation apparatus 4 from the version management DB 25.

Subsequently, at S2, a process is performed so as to create the instruction data 28 for updating the navigation map data 52 stored in the navigation apparatus 4 to the newest version of map information, based on the obtained information related to the version. The details of the instruction data 28 have already been explained above with reference to FIGS. 8 and 9. Thus, the explanation thereof will be omitted. The process performed at S2 corresponds to the process performed by the instruction data creating unit.

After that, at S3, the CPU 21 distributes the instruction data 28 that has been created at S2 to the navigation apparatus 4 installed in the vehicle 3. The instruction data 28 may be distributed via the network 11 **(cf.** **FIG. 2****)** or via a recording medium such as a DVD or a CD.
When having received the instruction data 28, the navigation apparatus 4 updates the navigation map data 52 based on the received instruction data 28.

Next, the map data update processing program executed by the CPU 71 included in the navigation apparatus 4 will be explained. First, at S11, the CPU 71 receives the instruction data 28 that has been transmitted from the map distribution center 2.

After that, at S12, the CPU 71 rewrites, in unites of bytes, the corresponding portions of the navigation map data 52 that is stored in the local storing DB 43 so that the corresponding portions have the new contents of data, according to the instruction data 28 that has been received at S11. Thus, the navigation map data 52 is updated to the new version of navigation map data 52. The method for updating the navigation map data 52 has already been explained above with reference to FIGS. 10 and 11. Thus, the explanation thereof will be omitted. The process performed at S12 corresponds to the process performed by the data updating unit.

Subsequently, at S 13, the CPU 71 also updates the reference-purpose navigation map data 51 stored in the application reference DB 42 to a new version of map data, by converting the navigation map data 52 that has been updated at S12.

As explained in detail above, in the map updating system 1 according to the present embodiment, the map distribution center 2 compares the version of the navigation map data 52 stored in the navigation apparatus 4 with the newest version map data among the basic map data 27 stored in the map distribution center 2, and creates the instruction data 28 that is in the format unified among the pieces of map structuring data that structure the map data **(S2).** The map distribution center 2 then transmits the created instruction data 28 to the navigation apparatus 4 **(S3).** On the other hand, the navigation apparatus 4 rewrites, in units of bytes, the corresponding data portions of the navigation map data 52 that have been identified in the transmitted instruction data 28, so that the corresponding portions have the new contents of data. The navigation map data 52 is thus updated to the new version of map data **(S12).** With this arrangement, when the map data is to be updated, it is possible to update only the portions that are being the update targets, without having to update the entirety of the pieces of map structuring data that structure the map data. As a result, it is possible to reduce the data amount that is required in the map data updating process. Consequently, it is possible to shorten the communication time related to the map data updating process, to reduce the communication cost, and to reduce the processing load related to the updating process.
In addition, the map structuring data is configured so as to be permanent by assigning the permanent IDs thereto. The one or more pieces of map structuring data that are being the update targets are identified by the instruction data by using the permanent IDs. As a result, it is possible to reduce the data size of the data within the instruction data that is required in order to identify the one or more pieces of map structuring data that are being the update targets. Consequently, it is possible to further reduce the data size of the instruction data.

The present invention is not limited to the embodiment described above. Needless to say, various improvements and modifications can be applied thereto without departing from the scope of the present invention.
For example, in the present embodiment described above, the updating system that updates the map data with the use of the instruction data 28 is applied when the map data stored in the HDD or the like included in the navigation apparatus 4 is to be updated. However, it is possible to apply the updating system when the map data stored in a dealer is to be updated.
A map distribution center creates an instruction data that is in a format unified among pieces of map structuring data that structure a map data and transmits the created instruction data to a navigation apparatus. The navigation apparatus rewrites, in units of bytes, a data portion of a navigation map data that has been identified by the transmitted instruction data so that the data portion has new contents of data, and the navigation map data is thus updated to a new version of map data.

## Claims

1. A map updating system **(1)** comprising:
a map data storing unit **(43)** that stores therein a plurality of pieces of map structuring data that structure a map data;
an instruction data creating unit **(20)** that creates an instruction data used for updating a pre-update and old piece of map structuring data among the plurality of pieces of map structuring data stored in the map data storing unit (43) to a post-update and new piece of map structuring data; and
a data updating unit (45) that updates the pre-update piece of map structuring data to the post-update piece of map structuring data according to an instruction in the instruction data, wherein
the instruction data identifies, in units of bytes, a portion to be updated within the pre-update piece of map structuring data and a post-update data content, and
the data updating unit (45) updates, in units of bytes, the portion to be updated that has been identified by the instruction data so that the portion has the post-update data content that has been identified by the instruction data.

2. The map updating system (1) according to claim 1, wherein
the map structuring data and the instruction data each contains an identifier, and
the instruction data identifies the pre-update piece of map structuring data as an update target among the plurality of pieces of map structuring data, based on the identifier.

3. A map updating method comprising:
an instruction data creating step (S2) of creating an instruction data used for updating a pre-update and old piece of map structuring data among a plurality of pieces of map structuring data that structure a map data to a post-update and new piece of map structuring data; and
a data updating step (S12) of updating the pre-update piece of map structuring data to the post-update piece of map structuring data according to an instruction of the instruction data; wherein
the instruction data identifies, in units of bytes, a portion to be updated within the pre-update piece of map structuring data and a post-update data content, and
the data updating step updates, in units of bytes, the portion to be updated that has been identified by the instruction data so that the portion has the post-update data content that has been identified by the instruction data.
